# EUROPEAN PATENT APPLICATION

(11) **EP 4 723 331 A1**
(43) Date of publication of application: **08.04.2026**
(21) Application number: 23939604.7
(22) Date of filing: 30.05.2023
(51) Int. Cl.: H01M 50/242, H01M 50/209

(54) **STORAGE BATTERY MODULE**

(71) Applicant: KABUSHIKI KAISHA TOSHIBA, Kawasaki-shi, Kanagawa 212-8585 (JP)
(72) Inventor: MOTHUKURU, Venkata Akhil, Tokyo 105-8001 (JP); KASAYA, Ryousuke, Kawasaki-shi, Kanagawa 212-0013 (JP); MATSUMOTO, Kyohei, Kawasaki-shi, Kanagawa 212-0013 (JP); MATSUO, Tatsumi, Tokyo 105-8001 (JP)
(74) Representative: Hoffmann Eitle
(86) International application number: PCT/JP2023/020166
(87) International publication number: WO 2024/247126

(57) **Abstract**

To provide a storage battery module in which a module, including battery cells, accommodated inside is prevented from being deformed or damaged due to vibrations experienced by a fixing portion during operation.

A storage battery module according to an embodiment is a storage battery module including: a plurality of battery cells; and a box-shaped case in which the battery cells are stored, in which the case includes a fixing surface, an upper surface facing the fixing surface, and a cover surface, a first side surface, a second side surface, and a third side surface connecting the fixing surface and the upper surface, and a lattice-truss rib including a lattice-shaped rib and a rhombus-shaped rib formed inside the lattice-shaped rib is regularly formed on outer walls of the first side surface, the second side surface, the third side surface, and the upper surface.

## Description

### Technical Field

Embodiments of the present invention relate to a storage battery module having a built-in battery cell that is mounted on an electrified vehicle or the like.

### Background Art

For example, a storage battery (also called secondary battery device) used in the electrified vehicles such as hybrid cars or electric cars needs to have high output and respond to frequent changes in output. Such a storage battery is used with a plurality of built-in battery cells being electrically connected in series or in parallel according to necessary output and capacity. In addition, the storage battery module is configured as a mechanically integrated storage battery module.

In the battery module, for example, the plurality of battery cells is vertically or horizontally arranged and accommodated in a case. A monitoring board that detects voltages or the like of the plurality of battery cells is also provided on the case. A cover is attached so as to cover the plurality of battery cells and the monitoring board.

The storage battery module used in such an electrified vehicle needs to take measures against vibrations (for example, vibrations in the vertical direction and the frontback direction) experienced during traveling.

### Citation List

Patent Literature 1: JP 2015-35397 A

### Summary of Invention

An object of the present invention is to provide a storage battery module in which a component, including battery cells, accommodated inside and a case are not deformed or damaged due to vibrations experienced by a fixing portion during operation.

A storage battery module according to an embodiment is a storage battery module including: a plurality of battery cells; and a box-shaped case in which the battery cells are stored, in which the case includes a fixing surface, an upper surface facing the fixing surface, and a cover surface, a first side surface, a second side surface, and a third side surface connecting the fixing surface and the upper surface, and a lattice-truss rib including a lattice-shaped rib and a rhombus-shaped rib formed inside the lattice-shaped rib is regularly formed on outer walls of the first side surface, the second side surface, the third side surface, and the upper surface.

According to the storage battery module of the embodiment, since the lattice-truss ribs are formed on the outer walls of the first side surface, the second side surface, the third side surface, and the upper surface, it is possible to alleviate the influence of vibrations experienced by the storage battery module. In addition, since the lattice-truss ribs have the same shape and are designed to be smaller as they approach fastening points where stress concentration is high, the load can be reduced. Furthermore, since the truss ribs on the fixing portion are designed to be perpendicular to a sliding surface at a fixing position, it is possible to increase the strength in the direction perpendicular to the fixing portion and to exhibit resistance to bending.

### Brief Description of Drawings

Fig. 1 is a perspective view of a state in which a fixing surface of a storage battery module according to an embodiment faces downward.
Fig. 2 is a perspective view of a state in which the fixing surface of the storage battery module according to the embodiment faces upward.
Fig. 3 is a view illustrating a shape of an outer wall (first embodiment) of a first side surface (longitudinal direction) of the storage battery module according to the embodiment.
Fig. 4 is a view illustrating a shape of an outer wall (second embodiment) of the first side surface (longitudinal direction) of the storage battery module according to the embodiment.
Fig. 5A is a view illustrating a shape of the fixing portion of the storage battery module according to the embodiment, and Fig. 5B is a cross-sectional surface along line A-A of Fig. 5A.
Fig. 6A is a cross-sectional view of a case surface of the first side surface (longitudinal direction) of the storage battery module according to the embodiment along line B-B, and Fig. 6B is a cross-sectional surface of the storage battery module along line C-C without rhombus-shaped ribs and truss ribs as a comparative example.
Fig. 7 is an exploded perspective view for explaining a configuration example of the storage battery module according to the embodiment.
Fig. 8 is a view for explaining deformation due to vibrations in the storage battery module, in which (A) is a view illustrating an example of change as viewed from the front (longitudinal direction), and (B) is a view illustrating an example of change as viewed from the side (lateral direction).

### Description of Embodiments

Hereinafter, a storage battery module according to an embodiment will be described with reference to the drawings.

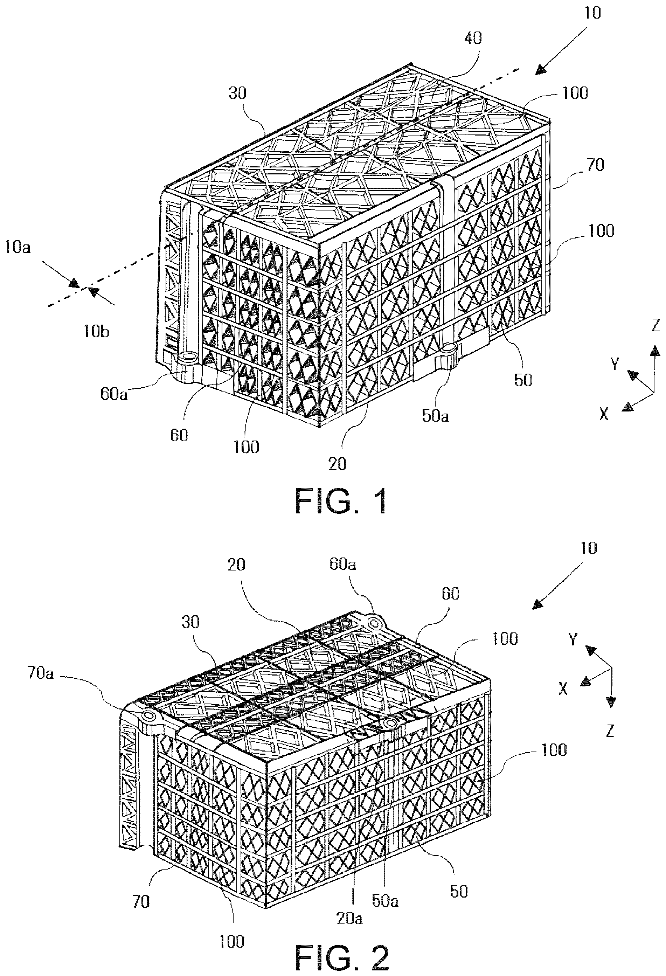

Figs. 1 and 2 are perspective views illustrating an overall configuration of a storage battery module 10 according to the embodiment. Fig. 1 illustrates a perspective view in a state where a fixing surface 20 faces downward. Fig. 2 illustrates a perspective view in a state where the fixing surface 20 faces upward. In the figures, XYZ indicate directions viewed from the fixing surface 20. For example, X indicates the longitudinal direction of a side surface, Y indicates the lateral direction of the side surface, and Z indicates the vertical direction.

As illustrated in Figs. 1 and 2, the storage battery module 10 has a box shape (rectangular parallelepiped shape) . In the storage battery module 10, a first case indicated by an arrow 10a and a second case indicated by an arrow 10b are combined and fixed by screws (not illustrated) at a plurality of portions of joint portions. Hereinafter, the first case and the second case are also collectively referred to as a case. A battery cell (not illustrated) is stored inside the case. The case is made of, for example, polypropylene and has insulating properties. The case may be formed of another synthetic resin or another material such as metal coated with an insulating material.

The case has six surfaces. The six surfaces are the fixing surface 20, a cover surface 30, an upper surface 40, a first side surface 50, a second side surface 60, and a third side surface 70. The fixing surface 20 is a surface at which the storage battery module 10 is attached to an installation portion of an electrified vehicle or the like. The upper surface 40 is a surface facing the fixing surface 20. The cover surface 30, the first side surface 50, the second side surface 60, and the third side surface 70 connect the fixing surface 20 and the upper surface 40. The cover surface 30 is provided with a terminal for connecting a power cable, a connector of a communication cable, and the like (not illustrated). The power cable and the communication cable may be directly connected to the fixing surface 20.

The first side surface 50 is a surface facing the cover surface 30, and a first fixing portion 50a is provided at an end portion of the first side surface 50 on the fixing surface 20 side. The second side surface 60 and the third side surface 70 are side surfaces located between the first side surface 50 and the cover surface 30. The second side surface 60 and the third side surface 70 face each other. A second fixing portion 60a is provided at an end portion of the second side surface 60 on the fixing surface 20 side. In addition, a third fixing portion 70a is provided at an end portion of the third side surface 70 on the fixing surface 20 side.

The first fixing portion 50a, the second fixing portion 60a, and the third fixing portion 70a are provided extending from the respective side surfaces to the fixing surface 20, and bolts or the like (not illustrated) are inserted therein to fix the storage battery module 10 to the installation portion. Here, the storage battery module 10 is structured to be fixed at each position of the three side surfaces (that is three positions), but may be fixed at all of the side surfaces (four positions).

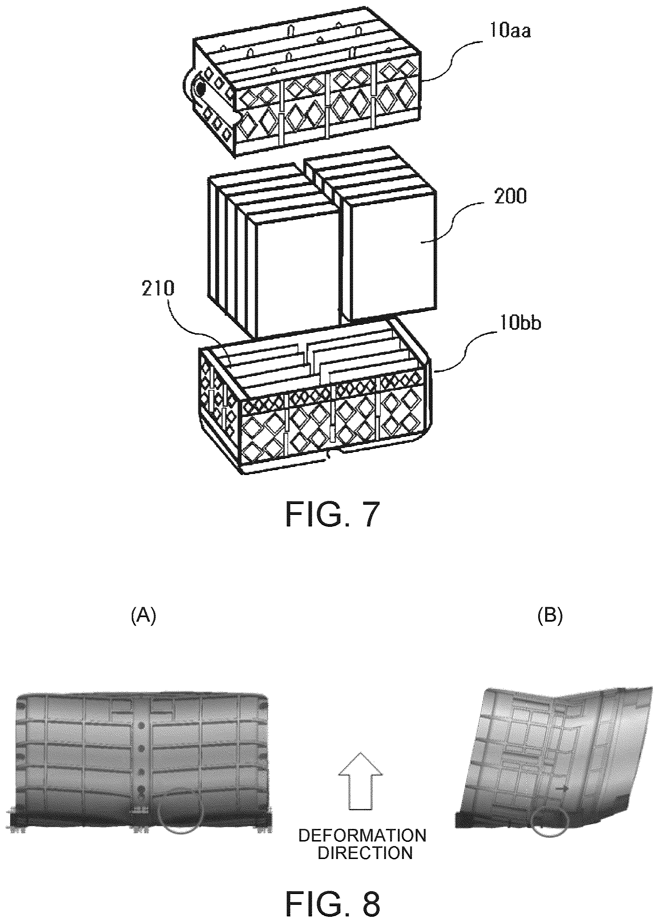

As illustrated in Fig. 7 to be described later, multiple layers (for example, four or five layers) of a battery cell 200 are stored inside the storage battery module 10 so as to be stacked in the Z direction. In a case where a battery cell 200 has multiple layers, it has been confirmed that a load is applied to the first fixing portion 50a, the second fixing portion 60a, and the third fixing portion 70a due to vibrations experienced during traveling of the electrified vehicle on which the storage battery module 10 is mounted.

Fig. 8 is a view for explaining deformation due to vibrations in the storage battery module. Fig. 8(A) illustrates an example of change in the side surface as viewed from the front (longitudinal direction), and Fig. 8(B) illustrates an example of change in the side surface as viewed from the side (lateral direction).

As illustrated in Fig. 8, for example, in the storage battery module having the fixing structure at three positions, it was observed that the force was applied toward each fixing portion, and a rib or the like formed on the outer wall was bent. In addition, when the strength and rigidity of the fixing portion were low, deformation of the rib was observed. Furthermore, when the vehicle travels on an uneven road (rough road) or the like, the vehicle continues to receive a strong load, which may lead to breakage of each fixing portion. Such a deformation of the storage battery module may damage a built-in device or member during operation.

Therefore, as illustrated in Fig. 1, in the storage battery module 10 according to the embodiment, the strength of the outer wall of the storage battery module 10 is increased by forming lattice-truss ribs 100 on the outer walls of at least the upper surface 40, the first side surface 50, the second side surface 60, and the third side surface 70 (excluding the cover surface 30).

Furthermore, as illustrated in Fig. 2, the lattice-truss ribs 100 are also formed on the fixing surface 20. Thus, the outer wall of the fixing surface 20 is also configured to increase the strength. As a result, the sturdy fixing surface 20 can be formed.

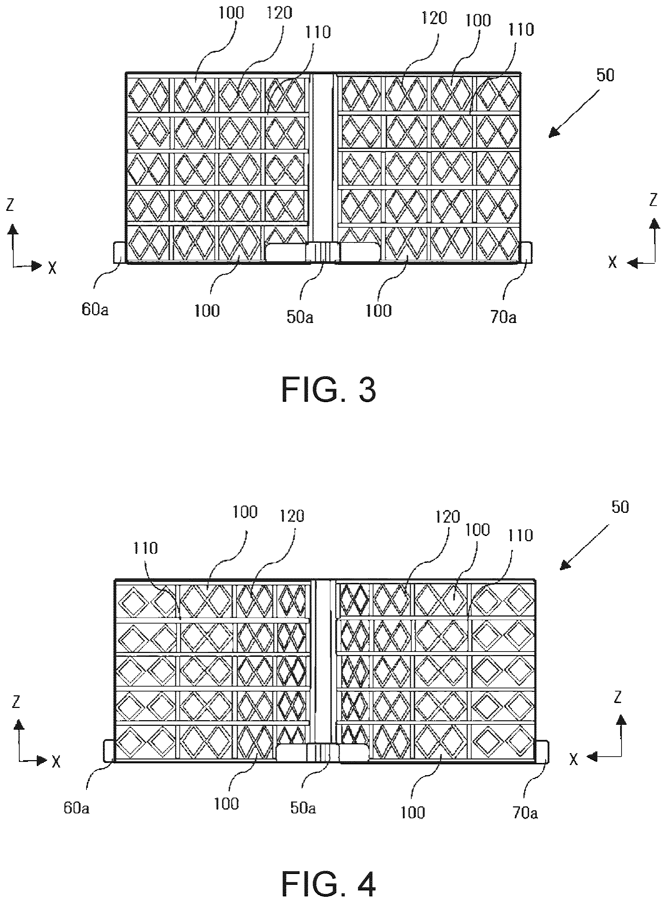

Figs. 3 and 4 are views illustrating the shape of the lattice-truss ribs 100 regularly formed on the first side surface 50 facing the cover surface 30. As illustrated in Figs. 3 and 4, the lattice-truss ribs 100 have the shape in which rhombus-shaped ribs 120 are provided inside lattice-shaped ribs 110. In order to mainly reduce impact, the lattice-truss ribs 100 are formed on the first side surface 50, the second side surface 60, the third side surface, and the upper surface 40 excluding the cover surface 30.

By forming the lattice-truss ribs 100 with the same shape and regularity with respect to at least the respective wall surfaces of the upper surface 40, the first side surface 50, the second side surface 60, and the third side surface 70 in this manner, the structure of the storage battery module 10 exhibits an effect of reducing the load and deformation due to vibrations.

In Fig. 3, each lattice-truss rib 100 has approximately the same size and is regularly disposed on the outer wall of the first side surface 50. By having a shape in which the rhombus-shaped ribs 120 are reinforced inside the lattice-shaped ribs 110, the strength can be increased and the rigidity can be increased as compared with the structure of only the lattice-shaped ribs 110. As a result, for example, even when the storage battery module 10 mounted on an electric vehicle experiences vibrations, deformation as illustrated in Fig. 8 can be prevented. That is, it has a shape that is difficult to bend with respect to the load toward the first fixing portion 50a (a load from the outside in the X direction on the left and right in Fig. 3).

Note that the fixing portions 60a and 70a of the second side surface 60 and the third side surface 70, which are not illustrated, also have shapes that are not easily bent with respect to loads directed to the fixing portions 60a and 70a (a load from the outside in the Y direction on the front and rear). Therefore, there is no possibility that the built-in battery cell is deformed or damaged.

In Fig. 4, each lattice-truss rib 100 is designed to be folded or compressed toward a central portion where the first fixing portion 50a is located. That is, the lattice-shaped ribs 110 have a shape in which the lateral width is narrowed toward the central portion (on the Z axis of the first fixing portion 50a). Therefore, the rhombus-shaped ribs 120 formed inside the lattice-shaped ribs 110 have a shape that becomes smaller toward the central portion where the first fixing portion 50a is located.

By forming the shape of the lattice-truss ribs 100 as illustrated in Fig. 4, the strength can be further increased, and the rigidity can be further increased. As a result, for example, even when the storage battery module 10 mounted on the electrified vehicle experiences vibrations, deformation as illustrated in Fig. 8 can be prevented. That is, the lattice-truss ribs 100 have a shape that is more difficult to bend with respect to the load toward the central portion where the first fixing portion 50a is located. Therefore, there is no possibility that the built-in battery cell is deformed or damaged.

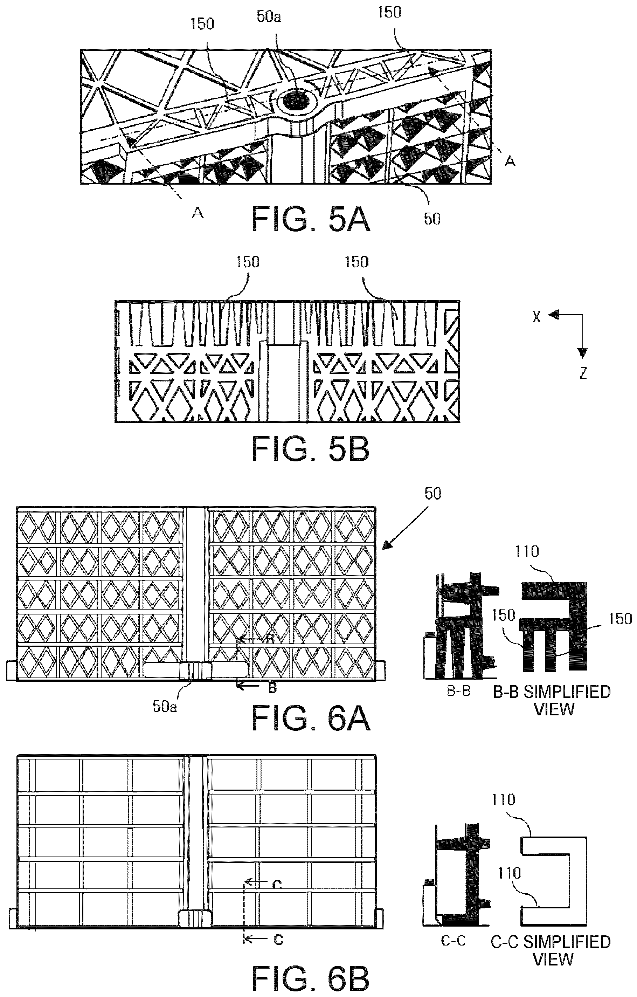

Fig. 5A is an enlarged view of a frame 20a in Fig. 2, and is a view illustrating a truss shape formed in the first fixing portion 50a. Fig. 5B is a cross-sectional view along line A-A of Fig. 5A. Here, the first fixing portion 50a is illustrated as an example, but the second fixing portion 60a and the third fixing portion 70a may also adopt the same shape.

As illustrated in Figs. 5A and 5B, truss ribs 150 extending in the depth direction (Z direction) are formed on an outer periphery (X direction) of the first fixing portion 50a. In addition, the truss rib 150 has a shape with a triangle as a basic unit, and is formed so as to become smaller in the X direction toward the first fixing portion 50a. As a result, bending of the rib at the first fixing portion 50a where stress concentration is high can be suppressed, and the load can be reduced. That is, deformation can be suppressed by adding the truss ribs 150 also in the Z direction perpendicular to the X direction, where stress is applied. As a result, the first fixing portion 50a, where stress is concentrated, is reinforced more firmly and is therefore less likely to bend.

Fig. 6A illustrates a cross-sectional view of the truss ribs 150 of the first fixing portion 50a along line B-B. Fig. 6B illustrates a cross-sectional view along line C-C at the same position in the storage battery module without the rhombus-shaped ribs 120 and the truss ribs 150 as a comparative example.

As illustrated in Fig. 6A, in a storage battery cover 10, since two legs are formed by the truss ribs 150, the cross-sectional area becomes large, and thus, the shape has increased strength against vibrations.

On the other hand, as illustrated in the simplified view along line C-C of Fig. 6B, in the storage battery module without the truss ribs 150, the cross section has an area of only the lattice-shaped ribs 110, and thus it can be seen that the cross-sectional area is smaller than that in Fig. 6A. Therefore, it cannot be said that it has sufficient strength against vibrations.

As described above, the cross-sectional area can be increased by adding the truss ribs 150 also in the Z direction of the first fixing portion 50a. As a result, a moment of inertia of area in the deformation direction can be increased. As a result, it is difficult to bend and rigidity can be increased. In this manner, by combining the lattice-shaped ribs and the truss ribs, impact can be alleviated, and deformation and bending of the module can be prevented.

Fig. 7 is a view illustrating a part of an internal configuration of the storage battery. Here, a first case 10aa, a second case 10bb, and battery cells 200 with 5 layers × 2 columns are illustrated. In Fig. 7, the lattice-truss ribs formed on the outer walls of the first case 10aa and the second case 10bb are omitted. In the second case 10bb, 4 × 2 columns of spacers 210 are integrally formed. The respective battery cells 200 are disposed while being insulated by the spacers 210. An upper surface of each battery cell 200 is covered with the first case 10aa, and the first case 10aa and the second case 10bb are fixed by screws. A bus bar, a wiring board, a top cover serving as the cover surface 30, and the like are further attached onto the first case 10aa. These structures may be well-known structures as described in, for example, Japanese Patent No. 6168986, and thus the description thereof will be omitted.

As described above, according to the storage battery module 10 of the embodiment, since the lattice-truss ribs 100 are formed on the outer walls of the first side surface 50, the second side surface 60, the third side surface 70, and the upper surface 40, it is possible to alleviate the influence of vibrations experienced by the storage battery module 10. In addition, since the lattice-truss ribs 100 have the same shape and are designed to be smaller as they approach fastening points where stress concentration is high, the load can be reduced. Furthermore, since the truss ribs 150 on the fixing portion are designed to be perpendicular to the sliding surface at the fixing position, it is possible to increase the strength in the direction perpendicular to the fixing portion and to exhibit resistance to bending.

The storage battery module according to the embodiment is the storage battery module 10 including: the plurality of battery cells 200; and the box-shaped case in which the battery cells 200 are stored, in which the case includes the fixing surface 20, the upper surface 40 facing the fixing surface 20, and the cover surface 30, the first side surface 50, the second side surface 60, and the third side surface 70 connecting the fixing surface 20 and the upper surface 40, and the lattice-truss ribs 100 including the lattice-shaped ribs 110 and the rhombus-shaped ribs 120 formed inside the lattice-shaped ribs 110 are regularly formed on the outer walls of the first side surface 50, the second side surface 60, the third side surface 70, and the upper surface 40. Accordingly, by forming the lattice-truss ribs 100 on at least the three side surfaces 50, 60, and 70 and the upper surface 40, the strength of the entire storage battery module can be increased and the rigidity can be increased. As a result, for example, when the storage battery module 10 is mounted on the electrified vehicle, deformation can be prevented even if the storage battery module 10 experiences vibrations.

In addition, in the storage battery module of the embodiment, the lattice-truss ribs 100 having the same size are regularly formed on the outer wall of the first side surface 50 facing the cover surface 30. As a result, for example, when the storage battery module 10 is mounted on the electrified vehicle, deformation can be prevented even if the storage battery module 10 experiences vibrations.

In addition, the storage battery module of the embodiment is configured such that a fixing portion 50a extending from the end portion of the first side surface 50 to the fixing surface 20 for fixing is provided, and the lattice-truss rib 100 is formed on the outer wall of the first side surface 50 facing the cover surface 30 so as to be gradually smaller in the direction in which the fixing portion 50a is located. As a result, for example, when the storage battery module 10 is mounted on the electrified vehicle, deformation can be prevented even if the storage battery module 10 experiences vibrations. In addition, it is possible to form a shape that is difficult to bend with respect to the load toward the fixing portion 50a where stress concentration is high.

In addition, the storage battery module of the embodiment has a configuration in which the lattice-truss ribs 100 are regularly formed on the outer wall of the fixing surface 20. As a result, the strength of the fixing surface 20 can also be increased, and the rigidity can be increased.

In addition, the fixing surface 20 of the storage battery module of the embodiment is fixed by the first fixing portion 50a extending from the end portion of the first side surface 50 facing the cover surface 30, and the truss rib is formed on the outer periphery of the first fixing portion 50a. As a result, it is possible to form a shape that is difficult to bend with respect to the load toward the first fixing portion 50a where stress concentration is high.

The fixing surface 20 of the storage battery module of the embodiment is fixed by three fixing portions 50a, 60a, and 70a extending from the end portions of the first side surface 50, the second side surface 60, and the third side surface 70, and the truss ribs are formed on the outer peripheries of the first fixing portion 50a of the fixing surface 20 extending from the first side surface 50 facing the cover surface 30, the second fixing portion 60a of the fixing surface 20 extending from the second side surface 60, and the third fixing portion 70a of the fixing surface 20 extending from the third side surface 70. As a result, the strength of the fixing surface 20 can also be increased, and the rigidity can be increased.

In addition, the truss ribs 150 of the storage battery module of the embodiment are configured to be formed in a direction perpendicular to the fixing surface 20. As a result, the strength of the fixing surface 20 can also be increased, and the rigidity can be increased.

Some embodiments of the present invention have been presented as examples, and are not intended to limit the scope of the invention. These novel embodiments can be implemented in various other forms, and various omissions, substitutions, and changes can be made without departing from the gist of the invention. These embodiments and modifications thereof are included in the scope and gist of the invention, and are included in the invention described in the scope of the claims and the equivalent scope thereof.

- 10: Storage battery module
- 10aa: First case
- 10bb: Second case
- 20: Fixing surface
- 30: Cover surface
- 40: Upper surface
- 50: First side surface
- 50a: First fixing portion
- 60: Second side surface
- 60a: Second fixing portion
- 70: Third side surface
- 70a: Third fixing portion
- 100: Lattice-truss rib
- 110: Lattice-shaped rib
- 120: rhombus-shaped rib
- 150: Truss rib
- 200: Battery cell
- 210: Spacer

## Claims

1. A storage battery module comprising:
a plurality of battery cells; and
a box-shaped case in which the battery cells are stored,
wherein
the case includes
a fixing surface,
an upper surface facing the fixing surface, and
a cover surface, a first side surface, a second side surface, and a third side surface connecting the fixing surface and the upper surface, and
a lattice-truss rib including a lattice-shaped rib and a rhombus-shaped rib formed inside the lattice-shaped rib is regularly formed on outer walls of the first side surface, the second side surface, the third side surface, and the upper surface.

2. The storage battery module according to claim 1, wherein the lattice-truss rib having a same size is regularly formed on the outer wall of the first side surface facing the cover surface.

3. The storage battery module according to claim 1, wherein a fixing portion extending from an end portion of the first side surface to the fixing surface for fixing is provided, and the lattice-truss rib is formed on the outer wall of the first side surface facing the cover surface so as to be gradually smaller in a direction in which the fixing portion is located.

4. The storage battery module according to claim 1, wherein the lattice-truss rib is regularly formed on an outer wall of the fixing surface.

5. The storage battery module according to claim 1, wherein
the fixing surface is fixed by a first fixing portion extending from an end portion of the first side surface facing the cover surface, and
a truss rib is formed on an outer periphery of the first fixing portion.

6. The storage battery module according to claim 1, wherein
the fixing surface is fixed by three fixing portions extending from end portions of the first side surface, the second side surface, and the third side surface, and
a truss rib is formed on outer peripheries of the first fixing portion of the fixing surface extending from the first side surface facing the cover surface, the second fixing portion of the fixing surface extending from the second side surface, and the third fixing portion of the fixing surface extending from the third side surface.

7. The storage battery module according to claim 5 or 6, wherein the truss rib is formed in a direction perpendicular to the fixing surface.
